## Europäisches Patentamt

## European Patent Office

## Office européen des brevets

(19)

(11) Veröffentlichungsnummer : **0 371 346 B1**

(12)

# EUROPÄISCHE PATENTSCHRIFT

(45) Veröffentlichungstag der Patentschrift :
**11.01.95 Patentblatt 95/02**

(51) Int. Cl.⁶ : **G01S 13/60**

(21) Anmeldenummer : **89121261.5**

(22) Anmeldetag : **17.11.89**

(54) **Anordnung zur Messung der horizontalen und/oder vertikalen Geschwindigkeitskomponente eines relativ zu einem zweiten Objekt bewegten ersten Objekts.**

(30) Priorität : **01.12.88 DE 3840449**

(43) Veröffentlichungstag der Anmeldung :
**06.06.90 Patentblatt 90/23**

(45) Bekanntmachung des Hinweises auf die Patenterteilung :
**11.01.95 Patentblatt 95/02**

(84) Benannte Vertragsstaaten :
**DE FR GB IT SE**

(56) Entgegenhaltungen :
**EP-A- 0 307 338**
**WO-A-83/03309**
**FR-A- 2 560 389**
**GB-A- 2 187 596**
**US-A- 4 450 449**
**US-A- 4 743 910**
**US-A- 4 845 506**

(73) Patentinhaber : **TEMIC TELEFUNKEN microelectronic GmbH**
**Theresienstrasse 2**
**D-74072 Heilbronn (DE)**
(84) **FR GB IT SE**
Patentinhaber : **Deutsche Aerospace AG**
**D-81663 München (DE)**
(84) **DE FR GB IT SE**

(72) Erfinder : **Huder, Bernhard, Dr.-Ing.**
**Maienweg 190**
**D-7900 Ulm (DE)**

(74) Vertreter : **Maute, Hans-Jürgen, Dipl.-Ing.**
**TEMIC TELEFUNKEN microelectronic GmbH**
**Postfach 35 35**
**D-74025 Heilbronn (DE)**

## Beschreibung

Die Erfindung bezieht sich auf eine Anordnung gemäß dem Oberbegriff des Patentanspruchs 1.

Eine solche Anordnung ist aus der FR-A-2 560 389 bekannt.

Anordnungen dieser Art sind mit Dopplerradarsensoren ausgerüstet und werden eingesetzt, um zwei zueinander orthogonale Geschwindigkeitskomponenten eines relativ zu einem anderen Objekt bewegten Objekts zu messen. Dies kann beispielsweise ein auf einer Straße fahrendes Fahrzeug sein oder über Land oder Wasser fliegendes Flugzeug oder ein bewegtes Teil einer Maschine.

Zur Messung der Geschwindigkeit eines Fahrzeugs über Grund beispielsweise wird eine solche Anordnung so am Fahrzeug befestigt, daß die Dopplersensoren auf den Grund (die Straße z.B.) strahlen. Tritt neben der horizontalen Bewegung mit der Geschwindigkeitskomponente $V_H$ auch eine vertikale Bewegung des Fahrzeugs mit der Geschwindigkeitskomponente $V_V$ auf (z.B. beim Ein- und Ausfedern eines Autos), so können, sowohl die horizontale Geschwindigkeitskomponente $V_H$ als auch die vertikale Geschwindigkeitskomponente $V_V$ aus den Dopplerfrequenzen bestimmt werden.

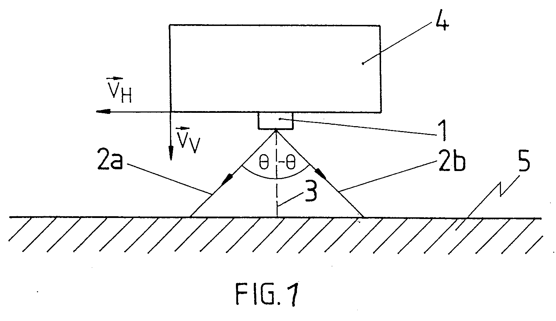

Die bekannte Anordnung gemäß Figur 1 sieht nur einen Dopplerradarsensor 1 am Fahrzeug 4 vor, der mit einer Antenne ausgerüstet ist, die zwei Strahlungskeulen 2a, 2b aufweist. Die Hauptstrahlrichtungen dieser Keulen 2a und 2b liegen unter Winkeln $+\theta$ bzw. $-\theta$ von der Grundnormalen 3 und zeigen in Fahrtrichtung bzw. gegen die Fahrtrichtung.

In diesem Fall entstehen zwei Dopplerfrequenzen $f_{Da}$ und $f_{Db}$, nämlich

$$f_{Da} = f_{DV} + f_{DH} \quad (1)$$

und

$$f_{Db} = f_{DV} - f_{DH} \quad (2)$$

wobei $f_{DH}$ die Dopplerfrequenz aus der Horizontalbewegung ist und $f_{DV}$ die aus der Vertikalbewegung.

Die Dopplerfrequenz $f_{DH}$ aus der Horizontalbewegung beträgt

$$f_{DH} = 2 \cdot f_S \cdot \frac{V_H \sin\theta}{C_O} \quad (3)$$

und die Dopplerfrequenz $f_{DV}$ aus der Vertikalbewegung beträgt

$$f_{DV} = 2 \cdot f_S \cdot \frac{V_V \cos\theta}{C_O} \quad (4)$$

wobei $f_S$ die Sendefrequenz des Dopplerradarsensors ist und $C_O$ die Lichtgeschwindigkeit im Vakuum bzw. (in einer Näherung) in Luft.

Als Empfangssignal ergibt sich ein Mischsignal aus dem reflektierten Strahlungsfeld 2a und 2b für beispielsweise einen Winkel von $\theta = 45°$ nach folgender Formel:

$$f_{DHV} = E \cdot \cos (2\pi f_s + \frac{4\pi V_V \cdot f_S}{C_O} \sin \theta) \, t \cdot \cos \frac{4\pi V_H f_S}{C_O} \cos \theta \, t$$

Dieses Signal $f_{DHV}$ ist amplitudenmoduliert mit einer Frequenz $f_{DH}$ gemäß Gleichung (3). Diese Gleichung enthält somit die notwendige Information zur Bestimmung der Horizontalgeschwindigkeit $V_H$, und zwar unabhängig von dem das Signal $f_{DHV}$ modulierende parasitäre Signal $V_V$.

Ferner ist aus der nachveröffentlichten Druckschrift EP-A-307 338 ist eine flächenhafte Mikrowellenantenne für Dopplerradarsensoren zur Messung der Geschwindigkeit eines bewegten Objektes bekannt, die ebenfalls zwei Strahlungskeulen erzeugt, deren Hauptstrahlrichtungen um einen Winkel $+\theta$ in die Bewegungsrichtung bzw. um einen Winkel $-\theta$ gegen die Bewegungsrichtung strahlen. Diese bekannte Antenne besteht aus mehreren, parallel angeordneten, punktsymmetrischen Strahlern, deren Symmetriezentren auf einer als Streifenleitung ausgebildeten Geraden c liegen, wobei diese Gerade senkrecht zu den Strahlern verläuft. Diese die Gerade c bildende Streifenleitung dient zur Speisung dieser Strahler.

Die Aufgabe der Erfindung besteht darin, eine Anordnung der eingangs genannten Art zu schaffen, die einen einfach aufgebauten Empfänger aufweist, der die Dopplerfrequenz $f_{DM}$ der Horizontalbewegung und die Dopplerfrequenz $f_{DV}$ der Horizontalbewegung aus dem Mischsignal $f_{DHV}$ erzeugt.

Die erfindungsgemäße Lösung der Aufgabe ist im Patentanspruch 1 beschrieben. Die übrigen Ansprüche enthalten vorteilhafte Aus- und Weiterbildungen sowie bevorzugte Anwendungen der Erfindung.

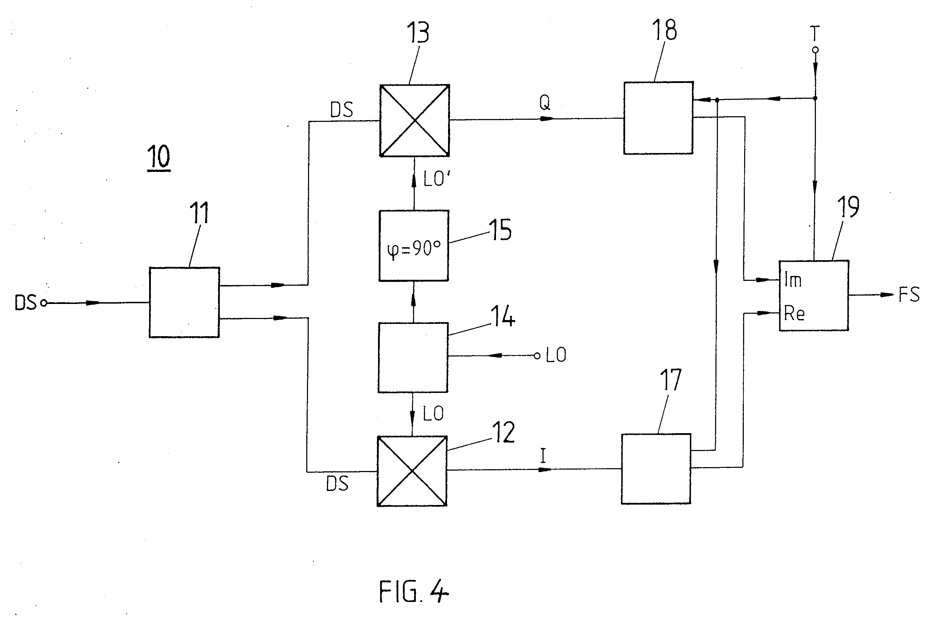

Es ist wohl ein Phasentyp-Mischer mit den kennzeichnenden Merkmalen a) und b1) des Patentanspruchs 1 aus dem Artikel von J. Schroth: "S-Band-Empfänger für die elektronisch steuerbare Antennenanlage ELR", Techn. Mitt. AEG-TELEFUNKEN 69 (1973) 3, Seiten 83 - 85, insbesondere Figur 4 bekannt. Dieser bekannte Mischer dient jedoch als Einseitenband-Mischer zur Unterdrückung der Spiegelfrequenz.

Die Vorteile der Erfindung sind vor allem in dem geringen Platzbedarf, dem geringen Aufwand und der billigen Herstellung zu sehen.

Im folgenden wird die Erfindung anhand der Figuren näher erläutert. Es zeigen:

Fig. 2    Frequenzspektren der von einer Anordnung gemäß Fig. 1 empfangenen Dopplersignale für verschiedene Bewegungszustände des Fahrzeugs;

Fig. 3    das Blockschaltbild einer Ausführungsform des Empfängerteils der erfindungsgemäßen Anordnung und

Fig. 4    das Blockschaltbild einer weiteren Ausführungsform des Empfängerteils der erfindungsgemäßen Anordnung.

Die erfindungsgemäße Dopplerradarsensoranordnung verwendet eine flächenhafte Gruppenantenne ("Array Antenna"), die insbesondere als planare Wanderwellenantenne ("Travelling Wave Antenna") aus einer Mehrzahl von Mikrostreifenleitungsstrahlern auf einem dielektrischen Trägermaterial aufgebaut ist und zu einer besonders kostengünstigen Anordnung führt.

Die Erzeugung einer Hauptkeule und deren Schwankung um den Winkel $\theta$ aus der Flächennormalen der Antenne wird durch phasenverschobene Speisung der einzelnen Mikrostreifenleitungsstrahler erreicht. Hierzu sind in ansich bekannter Weise die Wellenlänge $\lambda_W$ der Wanderwelle und der Abstand S der Strahler geeignet zu dimensionieren. Entsprechende Dimensionierungsvorschriften sind beispielsweise in Kapitel 10 des "Antenne Engineering Handbook" von Jasik, erschienen bei McGraw-Hill (New York, 1984), Kapitel 10, S. 4 - 5 beschrieben.

Die Gleichung zur Bestimmung der möglichen Winkel $\theta_n$ lautet beispielsweise für den Fall, daß die Einzelstrahler aufgrund ihrer Anordnung bei phasengleicher Speisung abwechselnd gegenphasig strahlen:

$$\sin \theta_n = \frac{\lambda_0}{\lambda_W} - \frac{\lambda_0}{S}(n + \tfrac{1}{2}) \quad (5)$$

für $n = 0, \pm 1, \pm 2, \pm 3 \ldots$ usw.

Die Strahlungskeule unter dem Winkel $-\theta$ wird mit der Mehrdeutigkeit der Strahlungscharaksistik einer Gruppenantenne erzeugt, indem der Abstand S der Einzelstrahler größer als die Hälfte der Wellenlänge $\lambda_0$ der Wanderwelle im Vakuum (bzw. angenähert in Luft) gewählt wird.

Die in phasengesteuerten Antennen an sich unerwünschte Mehrdeutigkeit der Richtcharakteristik (es treten Nebenkeulen mit großen Amplituden ("Grating Lobes") auf) wird bei der erfindungsgemäßen Lösung gezielt und mit großem Vorteil ausgenutzt.

Gemäß Kapitel 20, Seiten 6 - 7, des oben erwähnten "Antenna Engineering Handbook" von Jasik gilt für den Winkel $\theta_G$, unter dem eine zusätzliche Hauptkeule auftritt, falls die eigentliche Hauptkeule um den Winkel $\theta$ von der Flächennormalen der Antenne geschwenkt wird:

$$\sin \theta - \sin \theta_G = \pm \frac{\lambda_0}{S} \quad (6)$$

Bei $\theta_G = -\theta$ folgt demnach für den Abstand S der einzelnen Strahler:

$$S = \frac{\lambda_0}{2\sin\theta} \quad (7)$$

Vorstellbar ist auch eine Antennenanordnung mit $\theta_G \neq \theta$, was jedoch einen erhöhten Aufwand bei der Bestimmung der Geschwindigkeitskomponenten des Fahrzeugs (oder allgemein des bewegten Objekts) bedeutet.

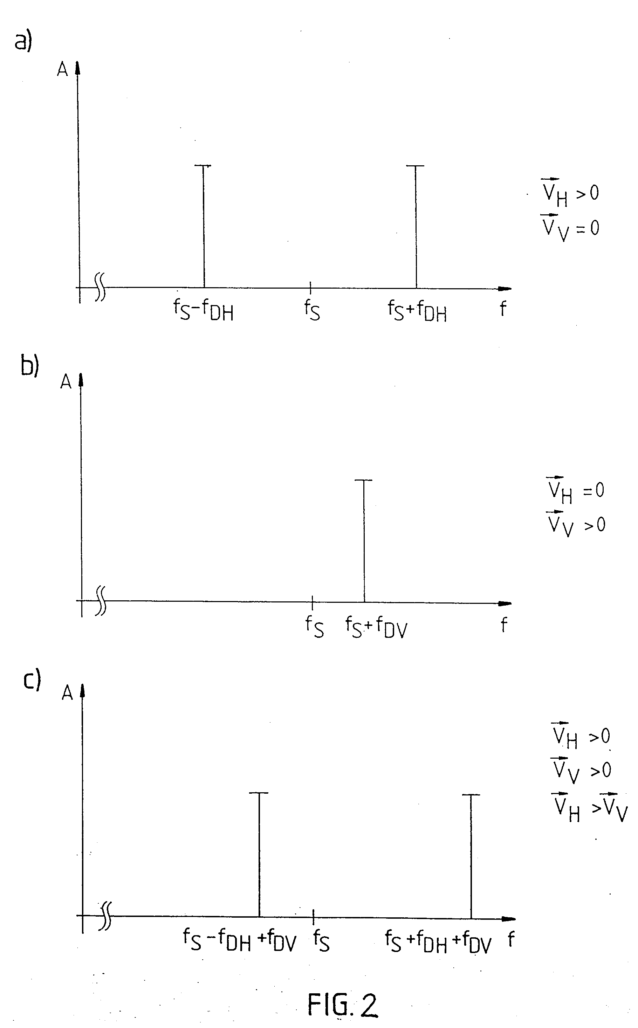

Am Antennenausgang der erfindungfsgemäßen Dopplerradarsensoranordnung liegt ein Signalgemisch vor, das in Fig. 2 für verschiedene Bewegungszustände des Fahrzeugs angegeben ist, und zwar in Fig. 2a für den Fall $V_H > 0$, $V_V = 0$, in Fig. 2b für den Fall $V_H = 0$, $V_V > 0$ und in Fig. 2c für den $V_H > 0$ und $V_V > 0$ sowie $V_H > V_V$. Vereinfachend wird dabei von einem beliebig schmalen Spektrum der empfangenen Dopplersignale $f_{Da}$ und $f_{Db}$ ausgegangen.

Das Dopplersignal $f_{Da}$, das von der ersten Antennenkeule (2a in Fig. 1) mit um den Winkel $+\theta$ von der Flächennormalen geschwenkten Hauptstrahlrichtung empfangen wird, liegt im oberen Seitenband OS des Trägers mit der Frequenz $f_S$. Das Dopplersignal $f_{Db}$, das von der zweiten Antennenkeule (2b in Fig. 1) mit um den Winkel $-\theta$ von der Flächennormalen geschwenkten Hauptstrahlrichtung empfangen wird, liegt hingegen im unteren Seitenband US des Trägers mit der Frequenz $f_S$. Dies gilt allerdings nur, solange die Bedingungen

$$|f_{DH}| > |f_{DV}| \quad (8)$$

und

$$f_{DH} > 0 \quad (9)$$

erfüllt sind.

Dem Empfänger der erfindungsgemäßen Dopplerradarsensoranordnung kommt die Aufgabe zu, die Signale des oberen und des unteren Seitenbandes an getrennten Ausgängen zur Verfügung zu stellen. Dann kann auf einfache Art und Weise gemäß den Gleichungen

$$f_{DH} = \tfrac{1}{2}(f_{Da} - f_{Db}) \quad (10)$$

und

$$f_{DV} = \tfrac{1}{2}(f_{Da} + f_{Db}) \quad (11)$$

durch Bilden der Differenz bzw. der Summe der beiden Dopplerfrequenzen $f_{Da}$ und $f_{Db}$ die horizontale Geschwindigkeitskomponente $V_H$ bzw. die vertikalen Geschwindigkeiteskoponente $V_V$ des Fahrzeugs bestimmt werden.

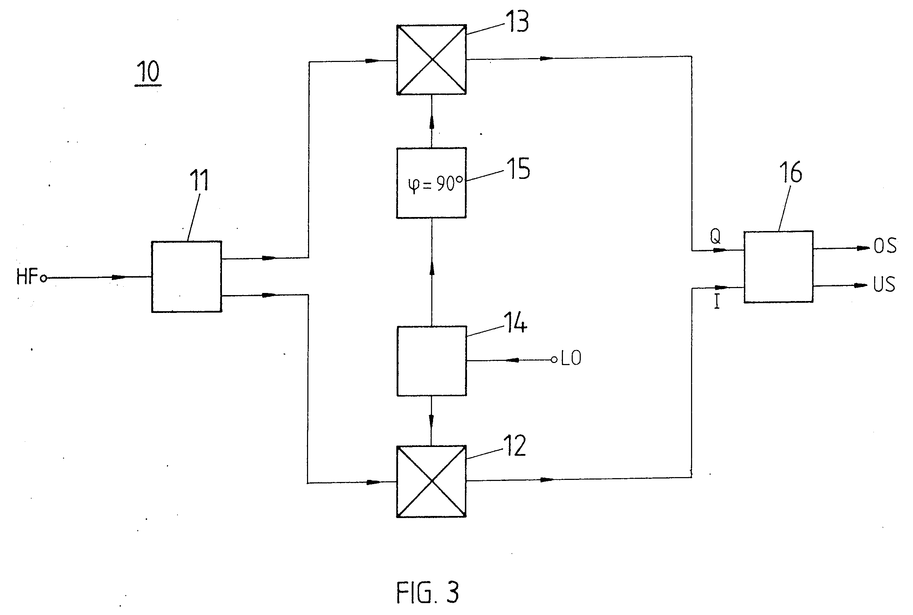

Bei dem Empfänger nach Figur 3 wird das empfangene hochfrequente Dopplersignalgemisch DS zunächst in einem 3dB-Leisungsteiler 11 mit 0°-Phasenverschiebung aufgeteilt und zwei Mischern 12 und 13 zugeführt und dort jeweils mit dem Signal eines Lokal-Oszillators gemischt. Die beiden LO-Signale LO und LO′ sind dabei um 90° gegeneinander phasenverschoben.

Dies wird hier beispielhaft erreicht, indem das Ausgangssignal eines Lokal-Oszillator LO zunächst in einem weiteren 3dB-Leistungsteiler 14 mit 0°-Phasenverschiebung aufgeteilt wird und das ein Ausgangssignal des Teilers 14 direkt dem Mischer 12 zugeführt wird, während das andere Ausgangssignal des Teilers 14 zusätzlich noch einen 90°-Phasenschieber 15 durchläuft. Die Ausgangssignale der beiden Mischer 12 und 13 bilden zusammen ein Quadratursignal mit In-Phase-Anteil I und Quadratur-Anteil Q und werden in ein 90°-3dB-Hybrid 16 eingespeist, an dessen einem Ausgang das obere Seitenband OS mit der Frequenz $f_{OS}$ und an dessen anderem Ausgang das untere Seitenband US mit der Frequenz $f_{US}$ erscheint, so daß die zur Bestimmung von $V_V$ und $V_H$ erforderliche Trennung von $f_{Da}$ und $f_{Db}$ damit erreicht ist.

Ein solcher Empfänger ist vorteilhaft als integrierte Schaltung aufzubauen.

Eine weitere vorteilhafte Ausführungsform eines Empfängers zeigt Fig. 4. Das nach der getrennten Mischung mit zwei um 90° phasenverschobenen Lokal-Oszillator-Signalen vorliegende Quadratursignal wird Analog-Digital-Wandlern 17 und 18 zugeführt. Die beiden digitalisierten Signale werden anschließend einem Fourierprozessor 19 als Realteil Re und als Imaginärteil Im zugeführt und dort einer Fouriertransformation unterzogen. Als Rechenalgorithmus eignet sich beispielsweise die Schnelle Fouriertransformation (FFT). Das Ausgangssignal des Fourierprozessors 19 enthält die Spektralanteile des Dopplersignals. Es weist Maxima auf bei den Frequenzen

$$f_1 = f_{DH} + f_{DV} \text{ mit } f_1 = f_{OS} - f_S \quad (12)$$

und

$$f_2 = f_{DH} - f_{DV} \text{ mit } f_2 = f_S - f_{US} \quad (13)$$

Daraus folgt analog zu den Gleichungen (1), (2), (10) und (11)

$$f_{DH} = \tfrac{1}{2}(f_1 + f_2) \quad (14)$$
$$f_{DV} = \tfrac{1}{2}(f_1 - f_2) \quad (15)$$

Für den Fall $f_{DH} < 0$ wird mit den Gleichungen (12) bis (15) die Geschwindigkeitskomponente $V_H$ nur betragsrichtig bestimmt.

Eine besonders vorteilhafte Ausführungsform des erfindungsgemäßen Dopplerradarsensor für den Millimeterwellenbereich setzt sich beispielsweise aus folgenden Baugruppen zusammen:
- Mikrostreifenleitungsantenne auf RT/Duroid 5870-Trägermaterial (RT/Duroid 5870 ist ein Warenzeichen),
- monolithisch integrierter Empfänger auf GaAs-Basis,
- wasserdicht verschlossenes Kunststoffgehäuse.

Für eine Trägerfrequenz $f_S = 24$ GHz ergibt sich damit eine Baugröße des Sensors von ca. 10 cm x 2 cm.

Es versteht sich, daß die Erfindung mit fachmännischem Können und Wissen aus- und weitergebildet bzw. an die unterschiedlichen Anwendungen angepaßt werden kann, ohne daß dies hier an dieser Stelle näher erläutert werden müßte.

So ist es z.B. möglich, anstelle der beiden AnalogDigital-Wandler in Fig. 5 nur einen einzigen Analog-Digital-Wandler einzusetzen, der im Zeitmultiplex-Betrieb die Signale beider Kanäle verarbeitet.

Weiterhin ist z.B. möglich, anstelle des speziellen Fourierprozessors in Fig. 5 ein anderes Rechenwek mit einem Programm zur Fouriertransformation zu verwenden.

Schließlich kann dieses Rechenwerk z.B. auch zur Bestimmung der Maxima im berechneten Frequenzspektrum des Dopplersignals und zur Berechnung von $f_{DH}$ und $f_{DV}$ bzw. $V_H$ und $V_V$ und gegebenenfalls weiterer interessierender Größen eingesetzt werden.


## Patentansprüche

1. Anordnung zur Messung der horizontalen und/oder vertikalen Geschwindigkeitskomponente eines relativ zu einem zweiten Objekt (5) bewegten ersten Objektes (4), mit einem aus einer als flächenhafte Gruppenantenne mit mehreren Strahlern ausgebildeten Sende/Empfangsantenne, einem Sender und einem Empfänger (10) bestehenden Dopplerradarsensor (1), welcher auf der dem zweiten Objekt zugewandten Seite des ersten Objektes angebracht ist und welcher mittels der Sende/Empfangsantenne ein auf das zweite Objekt gerichtetes und durch eine kollinear zur vertikalen Geschwindigkeitskomponente verlaufende Symmetrieachse charakterisiertes Strahlungsfeld mit zwei Hauptkeulen (2a, 2b) erzeugt, deren Hauptstrahlrichtungen in der durch die beiden Geschwindigkeitskomponenten aufgespannten Ebene liegen, wobei die Hauptstrahlrichtung der ersten Hauptkeule (2a) um den Winkel θ in Bewegungsrichtung von der Symmetrieachse und die Hauptstrahlrichtung der zweiten Hauptkeule (2b) entsprechend um den Winkel -θ gegen die Bewegungsrichtung, mit θ < 90 °, abweicht, gekennzeichnet durch folgende Merkmale:

a) das von dem Empfänger (10) empfangene Dopplersignalgemisch wird durch Mischung mit zwei um 90° gegeneinander phasenverschobenen Lokaloszillatorsignalen (LO, LO′) in ein aus In-Phase-Anteil (I) und Quadratur-Anteil (Q) bestehendes Quadratursignal umgewandelt,

b1) die beiden Anteile (I, Q) werden einem 90°-Hybrid (16) zugeführt, an dessen einem Ausgang das untere Seitenband (US) und an dessen anderem Ausgang das obere Seitenband (OS) erscheint, um die horizontale und/oder vertikale Geschwindigkeitskomponente zu ermitteln, oder

b2) diese beiden Anteile (I, Q) werden jeweils einem Analog - Digital-Wandler (17, 18) zugeführt und die digitalisierten Signale der beiden Wandler (17, 18) werden als Real (Re)- bzw. Imaginär (Im)-Teil des Zeitsignals einem Fourierprozessor (19) zwecks Bestimmung des Frequenzspektrums (FS) dieses Zeitsignals zugeführt, um die horizontale und/oder vertikale Geschwindigkeitskomponente zu ermitteln.

2. Anordnung nach Anspruch 1, dadurch gekennzeichnet, daß der Fourierprozessor (19) mit dem Algorithmus der schnellen Fouriertransformation (FFT) arbeitet.

3. Anordnung nach einem der Ansprüche 1 oder 2, dadurch gekennzeichnet, daß der Empfänger als monolithisch integrierter Baustein auf GaAs-Basis realisiert ist.

4. Anordnung nach einem der vorhergehenden Ansprüche, dadurch gekennzeichnet, daß sie als Teil eines Geschwindigkeitsmeßsystems realisiert ist, das an einem Fahrzeug oder an einem Flugzeug angebracht ist.

## Claims

1. Arrangement for measuring the horizontal and/or vertical speed components of a first object (4) that is moved relative to a second object (5) including a transmit/receive antenna formed by a flat-top array antenna having a plurality of radiators, a doppler radar sensor (1) consisting of a transmitter and a receiver (10) which is located on the side of the first object facing the second object and which generates a radiation field that is directed towards the second object by means of the transmit/receive antenna and is characterised by an axis of symmetry that runs co-linear with the vertical speed component, the radiation field having two main lobes (2a, 2b) whose main directions of radiation lie in the plane set by the two speed components, wherein the main direction of radiation of the first main lobe (2a) diverges in the direction of motion from the axis of symmetry by the angle θ and the main direction of radiation of the second main lobe (2b) correspondingly diverges in the direction opposite to the direction of motion by the angle -θ where θ < 90°, characterised by the following features:

a) the complex doppler signal received by the receiver (10) is converted into a quadrature signal consisting of an in-phase component (I) and a quadrature component (Q) by being mixed with two local oscillator signals (LO, LO′) that are phase displaced by 90° with respect to one another,

b1) the two components (I, Q) are supplied to a 90° hybrid circuit (16) at whose one output the lower sideband (US) and at whose other output the upper sideband (OS) appears for determining the horizontal and/or vertical speed component, or

b2) these two components (I, Q) are supplied to a respective analog/digital converter (17, 18) and the digitalised signals from the two converters (17, 18) are supplied as respective real (Re) and imaginary (Im) parts of the time signal to a fourier processor (19) for the purpose of determining the frequency spectrum (FS) of this time signal in order to determine the horizontal and/or vertical speed component.

2. Arrangement in accordance with Claim 1, characterised in that, the fourier processor (19) works with a fast fourier transformation algorithm (FFT)

3. Arrangement in accordance with Claims 1 or 2, characterised in that, the receiver is implemented as a monolithic integrated module on a GaAs substrate.

4. Arrangement in accordance with any of the preceding Claims, characterised in that, it is implemented as part of a speed measuring system which is mounted on a vehicle or on an aircraft.

**Revendications**

1. Dispositif de mesure des composantes de vitesse horizontale et/ou verticale d'un premier objet (4) en mouvement relativement à un second objet (2), comprenant un capteur radar Doppler (1) composé d'une antenne d'émission/réception réalisée comme une antenne en réseau, de surface, constituée de plusieurs radiateurs, d'un émetteur et d'un récepteur (10), capteur qui est disposé sur le côté du premier objet tourné vers le second objet et qui génère, au moyen de l'antenne d'émission/réception, un champ de rayonnement dirigé sur le second objet et caractérisé par un axe de symétrie d'extension colinéaire à la composante de vitesse verticale, champ de rayonnement qui présente deux lobes principaux (2a, 2b) dont les directions principales de rayonnement sont situées dans le plan sous-tendu par les deux composantes de vitesse, la direction principale de rayonnement du premier lobe principal (2a) s'écartant de l'angle $\theta$ de l'axe de symétrie dans la direction de mouvement et la direction principale de rayonnement du second lobe principal (2b) s'écartant de façon correspondante de cet axe de l'angle $-\theta$ en sens contraire au mouvement, l'angle $\theta$ étant inférieur 90°, caractérisé en ce que:

   a) le signal Doppler composite reçu par le récepteur (10), est transformé, par mélange avec deux signaux (LO, LO') mutuellement déphasés de 90° d'oscillateurs locaux, en un signal en quadrature constitué d'une composante en phase (I) et d'une composante en quadrature (Q),

   b1) les deux composantes (I, Q) sont envoyées à un coupleur hybride de 90° (16) à l'une des sorties duquel apparaît la bande latérale inférieure (US) et à l'autre sortie duquel apparaît la bande latérale supérieure (OS), en vue de la détermination de la composante de vitesse horizontale et/ou verticale, ou

   b2) ces deux composantes (I, Q) sont envoyées chacune à un convertisseur analogique/numérique respectif (17, 18) et les signaux numérisés des deux convertisseurs (17, 18) sont envoyés en tant que partie réelle (Re) et partie imaginaire (Im) du signal de temps à un processeur de Fourier (19) à des fins de détermination du spectre de fréquences (FS) de ce signal de temps, en vue de la détermination de la composante de vitesse horizontale et/ou verticale.

2. Dispositif selon la revendication 1, caractérisé en ce que le processeur de Fourier (19) utilise l'algorithme de la transformation de Fourier rapide (TFR).

3. Dispositif selon la revendication 1 ou 2, caractérisé en ce que le récepteur est réalisé sous la forme d'un composant à intégration monolithique à base de GaAs.

4. Dispositif selon une des revendications précédentes, caractérisé en ce qu'il est réalisé comme une partie d'un système de mesure de vitesse monté sur un véhicule ou sur un avion.

EP 0 371 346 B1

FIG. 1

a)

$\vec{V}_H > 0$
$\vec{V}_V = 0$

A

$f_S - f_{DH}$    $f_S$    $f_S + f_{DH}$    f

b)

A

$\vec{V}_H = 0$
$\vec{V}_V > 0$

$f_S$   $f_S + f_{DV}$    f

c)

A

$\vec{V}_H > 0$
$\vec{V}_V > 0$
$\vec{V}_H > \vec{V}_V$

$f_S - f_{DH} + f_{DV}$   $f_S$    $f_S + f_{DH} + f_{DV}$   f

FIG. 2

FIG. 3

EP 0 371 346 B1

FIG. 4

EP 0 371 346 B1